# EUROPEAN PATENT APPLICATION

(11) **EP 4 089 339 A1**
(43) Date of publication of application: **16.11.2022**
(21) Application number: 21738563.2
(22) Date of filing: 06.01.2021
(51) Int. Cl.: F24F 11/39, F24F 7/007, F24F 110/65

(54) **USEFUL INFORMATION PROVISION SYSTEM**

(30) Priority: 07.01.2020 JP 2020001006
(71) Applicant: Daikin Industries, Ltd., Osaka-shi, Osaka 530-8323 (JP)
(72) Inventor: SUZUKI, Kanako, Osaka-shi, Osaka 530-8323 (JP)
(74) Representative: Global IP Europe Patentanwaltskanzlei
(86) International application number: PCT/JP2021/000210
(87) International publication number: WO 2021/141047

(57) **Abstract**

A useful information provision system (100) includes: an information acquisition unit (10) configured to acquire, for each kind of allergen, information about an amount of allergen in a space where an apparatus (200) configured to reduce allergen is installed; an information accumulation unit (20) configured to accumulate the information acquired by the information acquisition unit; and a useful information output unit (30) configured to generate and output useful information based on the information accumulated in the information accumulation unit.

## Description

### TECHNICAL FIELD

Embodiments disclosed herein relate to a useful information provision system.

### BACKGROUND ART

Patent Literature 1 (JP 2018-146228 A) discloses a technique for acquiring analysis data on contaminants in the air by sending to an outside analysis agency a collection and analysis member by which the contaminants are collected.

### SUMMARY OF THE INVENTION

### <Technical Problem>

It has been necessary to send such a collection and analysis member to the outside, which takes a long time until a user finds a tendency of a change in amount of contaminants.

### <Solution to Problem>

A first aspect is directed to a useful information provision system including an information acquisition unit, an information accumulation unit, and a useful information output unit. The information acquisition unit is configured to acquire, for each kind of allergen, information about an amount of allergen in a space where an apparatus configured to reduce allergen is installed. The information accumulation unit is configured to accumulate the information acquired by the information acquisition unit. The useful information output unit is configured to generate and output useful information based on the information accumulated in the information accumulation unit.

With the useful information provision system, a user does not need to send a collection and analysis member to the outside, and is therefore able to find a tendency of the amount of allergen in a relatively short time.

A second aspect is directed to the useful information provision system according to the first aspect, in which the information acquisition unit further acquires operation data on the apparatus. The useful information provision system further includes an operation-correlated information generation unit configured to generate information about a correlation between an operation of the apparatus and a change in the amount of allergen.

The useful information provision system is capable of acquiring information about the change in the amount of allergen by the operation of the apparatus.

A third aspect is directed to the useful information provision system according to the first aspect, in which the useful information output unit outputs, as the useful information, time-series data on the amount of allergen.

The useful information provision system is capable of obtaining data on the amount of allergen successively.

Afourth aspect is directed to the useful information provision system according to the first aspect, in which the useful information output unit outputs, as the useful information, information about maintenance of the apparatus.

With the useful information provision system, the user is able to perform maintenance on the apparatus configured to reduce allergen, by referring to the useful information.

A fifth aspect is directed to the useful information provision system according to the fourth aspect, in which the maintenance of the apparatus includes an apparatus filter replacement service or an apparatus filter cleaning service.

With the useful information provision system, the user is able to specifically understand how to perform maintenance on the apparatus configured to reduce allergen.

A sixth aspect is directed to the useful information provision system according to the first aspect, in which the useful information output unit outputs, as the useful information, a measure for each kind of allergen.

With the useful information provision system, the user is able to take a measure for reducing allergen for each kind of allergen, by referring to the useful information.

A seventh aspect is directed to the useful information provision system according to the sixth aspect, in which the measure for each kind of allergen includes a cleaning of the space or a method of suppressing introduction of outside air into the space.

With the useful information provision system, the user is able to find a specific measure for each kind of allergen.

An eighth aspect is directed to the useful information provision system according to the first aspect, in which the information acquisition unit chronologically acquires the information about the amount of allergen in the space where the apparatus is installed.

With the useful information provision system, the user does not need to send a collection and analysis member to the outside, and is therefore able to find a tendency of the amount of allergen in a relatively short time.

### BRIEF DESCRIPTION OF THE DRAWINGS

FIG. 1 is a functional block diagram of a useful information provision system.
FIG. 2 is a flowchart of the useful information provision system.
FIG. 3 is a functional block diagram of a useful information provision system according to a modification.
FIG. 4 is a flowchart of the useful information provision system according to the modification.
FIG. 5 is a diagram of the useful information provision system according to the modification.

### DESCRIPTION OF EMBODIMENTS

### <First Embodiment

### (1) General Configuration

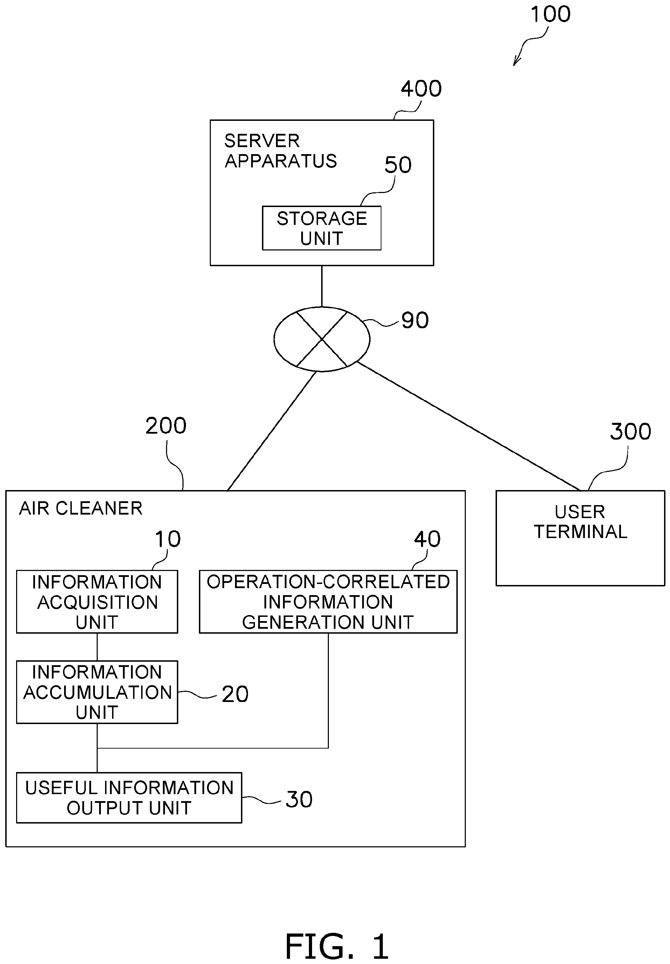

As illustrated in FIG. 1, a useful information provision system 100 according to this embodiment includes an air cleaner 200, a user terminal 300, and a server apparatus 400. The server apparatus 400 acquires information from the air cleaner 200 via a network 90. The user terminal 300 acquires information from the server apparatus 400 via the network 90.

### (2) Specific Configuration

### (2-1) Air cleaner

In the useful information provision system 100 according to this embodiment, the air cleaner 200 corresponds to an apparatus configured to reduce allergen. The air cleaner 200 includes an information acquisition unit 10, an information accumulation unit 20, a useful information output unit 30, and an operation-correlated information generation unit 40.

### (2-1-1) Information acquisition unit

In the air cleaner 200, the information acquisition unit 10 acquires, for each kind of allergen, information about an amount of allergen in a space where the air cleaner 200 is installed. Examples of the allergen may include, but not limited to, mold, pollen, and pet dandruff. The information acquisition unit 10 acquires the information about the amount of allergen, for each kind of allergen. The information acquisition unit 10 acquires information about an increase or decrease of (i.e., a change in amount of) allergen in a relatively short time or in real time.

The information acquisition unit 10 also acquires operation data on the air cleaner 200. For example, the information acquisition unit 10 acquires information about an operating time of the air cleaner 200.

### (2-1-2) Information accumulation unit

In the air cleaner 200, the information accumulation unit 20 accumulates the information about the amount of allergen, the information being acquired by the information acquisition unit 10, and the information about the operating time of the air cleaner 200, the information being acquired by the information acquisition unit 10.

### (2-1-3) Useful information output unit

In the air cleaner 200, the useful information output unit 30 generates and outputs useful information based on the information accumulated in the information accumulation unit 20. The useful information output unit 30 chronologically acquires, as the useful information, time-series data on the amount of allergen.

### (2-1-4) Operation-correlated information generation unit

In the air cleaner 200, the operation-correlated information generation unit 40 generates information about a correlation between an operation of the air cleaner 200 and a change in the amount of allergen.

### (2-2) User terminal

The user terminal 300 receives the useful information output by the useful information output unit 30 of the air cleaner 200, from the server apparatus 400 via the network 90.

### (2-3) Server apparatus

The server apparatus 400 is practicable using a computer. The server apparatus 400 includes a control computing device (not illustrated) and a storage unit 50. The control computing device may be a processor such as a central processing unit (CPU) or a graphics processing unit (GPU). The control computing device reads a program from the storage unit 50 and executes predetermined computation processing according to the program. In accordance with the program, the control computing device is capable of writing a result of computation into the storage unit 50 and is capable of reading information from the storage unit 50. Various functional blocks illustrated in FIG. 1 are implemented by the control computing device. The storage unit 50 may serve as a database.

### (3) General Operation

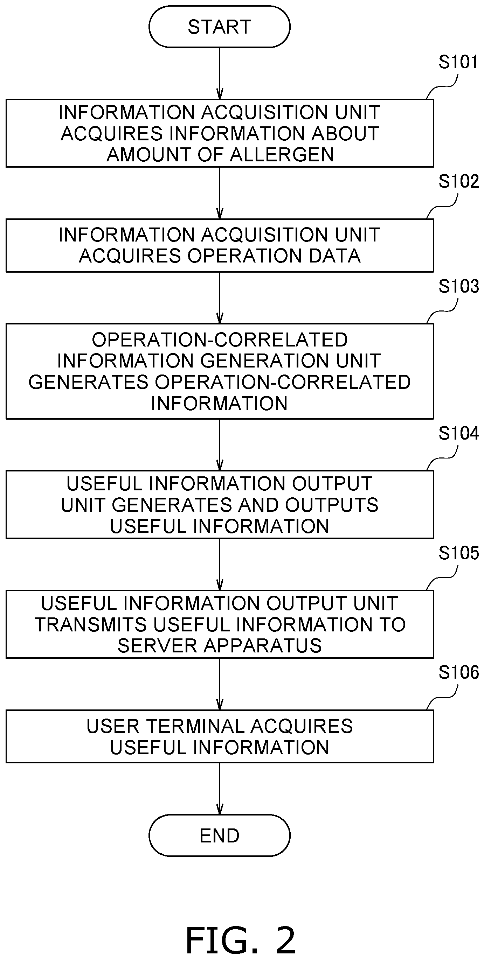

Next, a description will be given of a case where the air cleaner 200 incorporates therein the information acquisition unit 10 functioning as an allergen sensor. FIG. 2 is a flowchart of the useful information provision system 100 according to this embodiment.

In step S101, first, the information acquisition unit 10 acquires, for each kind of allergen, an amount of allergen in the space where the air cleaner 200 is installed. In step S102, next, the information acquisition unit 10 also acquires operation data on the air cleaner 200.

The information accumulation unit 20 accumulates the information about the amount of allergen, the information being acquired by the information acquisition unit 10, and the operation data on the air cleaner 200, the operation data being acquired by the information acquisition unit 10.

In step S103, next, the operation-correlated information generation unit 40 generates operation-correlated information about a correlation between the operation data on the air cleaner 200 and a change in the amount of allergen.

In step S104, next, the useful information output unit 30 generates and outputs useful information based on the information accumulated in the information accumulation unit 20. The useful information output unit 30 may generate useful information based on operation-correlated information about a correlation between an operation of the air cleaner 200 and the change in the amount of allergen, the operation-correlated information being acquired from the operation-correlated information generation unit 40.

In step S105, next, the useful information output unit 30 transmits the useful information to the server apparatus 400 via the network 90.

The storage unit 50 of the server apparatus 400 stores the useful information transmitted from the air cleaner 200.

In step S106, next, the user terminal 300 acquires the information stored in the storage unit 50 of the server apparatus 400, via the network 90.

### (4) Features

(4-1)
The useful information provision system 100 according to this embodiment includes the information acquisition unit 10, the information accumulation unit 20, and the useful information output unit 30. The information acquisition unit 10 is configured to acquire, for each kind of allergen, information about an amount of allergen in the space where the apparatus configured to reduce allergen is installed. The information accumulation unit 20 is configured to accumulate the information acquired by the information acquisition unit 10. The useful information output unit 30 is configured to generate and output useful information based on the information accumulated in the information accumulation unit 20.

In the useful information provision system 100, the information acquisition unit 10 acquires information about an amount of allergen. Therefore, the user does not need to send a collection and analysis member to the outside, and is able to find a tendency of the amount of allergen in a relatively short time. The useful information provision system 100 allows the user to find the tendency of the amount of allergen in a relatively short time, and notifies the user of a measure according to an allergen substance. The useful information provision system 100 proposes an optimal service for each living environment, in accordance with an allergen value for each substance detected by the allergen sensor and an operation status of the apparatus configured to reduce allergen.

(4-2)
In the useful information provision system 100 according to this embodiment, the information acquisition unit 10 further acquires operation data on the apparatus. The useful information provision system 100 according to the first embodiment further includes the operation-correlated information generation unit 40 configured to acquire information about a correlation between an operation of the apparatus and a change in the amount of allergen.

In the useful information provision system 100, the operation-correlated information generation unit 40 generates information about a correlation between the operation data on the apparatus and the change in the amount of allergen.

(4-3)
In the useful information provision system 100 according to this embodiment, the useful information output unit 30 outputs, as the useful information, time-series data on the amount of allergen.

In the useful information provision system 100, the useful information output unit 30 outputs, as the useful information, time-series data on the amount of allergen. The user is therefore able to grasp a chronological change in the amount of allergen.

(4-4)
In the useful information provision system 100 according to this embodiment, the useful information output unit 30 outputs, as the useful information, information about maintenance of the apparatus.

In the useful information provision system 100, the useful information output unit 30 generates and outputs the useful information. Therefore, the user is able to perform maintenance on the apparatus configured to reduce allergen, by referring to the useful information.

(4-5)
In the useful information provision system 100 according to this embodiment, the maintenance of the apparatus includes an apparatus filter replacement service or an apparatus filter cleaning service.

With the useful information provision system 100, the user is able to specifically understand how to perform maintenance on the apparatus configured to reduce allergen.

(4-6)
In the useful information provision system 100 according to this embodiment, the useful information output unit 30 outputs, as the useful information, a measure for each kind of allergen.

In the useful information provision system 100, the useful information output unit 30 generates and outputs the useful information. Therefore, the user is able to take a measure for reducing allergen for each kind of allergen, by referring to the useful information.

(4-7)
In the useful information provision system 100 according to this embodiment, the measure for each kind of allergen includes a cleaning of the space or a method of suppressing introduction of outside air into the space.

With the useful information provision system 100, the user is able to find a specific measure for each kind of allergen.

(4-8)
In the useful information provision system 100 according this embodiment, the information acquisition unit 10 chronologically acquires the information about the amount of allergen in the space where the apparatus is installed.

In the useful information provision system 100, the information acquisition unit 10 chronologically acquires information about an amount of allergen. Therefore, the user does not need to send a collection and analysis member to the outside, and is able to find a tendency of the amount of allergen in a relatively short time.

### (5) Modifications

### (5-1) Modification 1A

In the foregoing description on the useful information provision system 100 according to this embodiment, the information acquisition unit 10 functioning as an allergen sensor is incorporated in the air cleaner 200. Alternatively, an allergen sensor may be provided separately from an apparatus configured to reduce allergen.

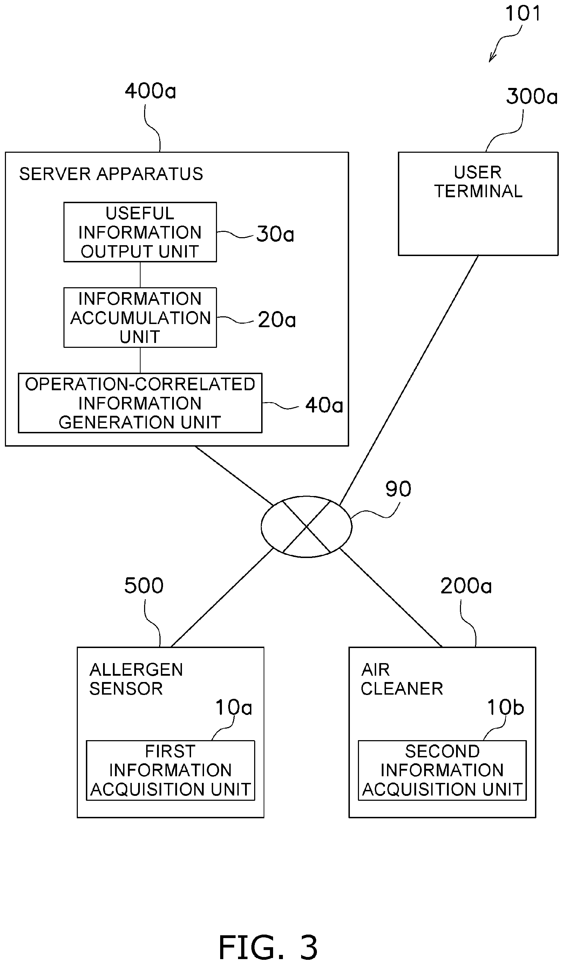

FIG. 3 illustrates a useful information provision system 101 including an allergen sensor and an apparatus configured to reduce allergen and provided separately from the allergen senor. As illustrated in FIG. 3, the useful information provision system 101 includes an air cleaner 200a, a user terminal 300a, a server apparatus 400a, and an allergen sensor 500.

In the useful information provision system 100 according to the first embodiment, the information acquisition unit 10 of the air cleaner 200 acquires operation data and information about an amount of allergen. In the useful information provision system 101 according to Modification 1A, the allergen sensor 500 includes a first information acquisition unit 10a configured to acquire, for each kind of allergen, information about an amount of allergen in a space where the air cleaner 200a is installed. The air cleaner 200a includes a second information acquisition unit 10b configured to acquire operation data on the air cleaner 200a.

The server apparatus 400a includes an information accumulation unit 20a, a useful information output unit 30a, an operation-correlated information generation unit 40a, and a storage unit 50 (not illustrated).

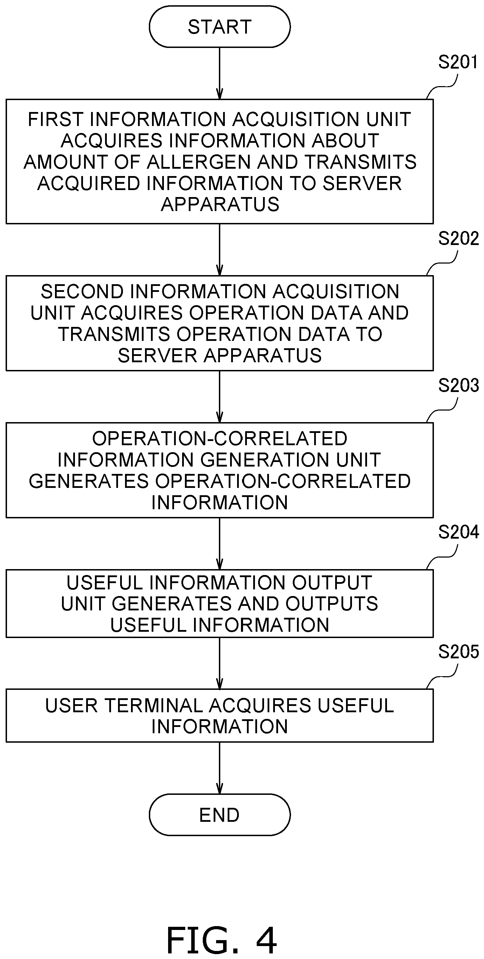

FIG. 4 is a flowchart of the useful information provision system 101.

In step S201, first, the first information acquisition unit 10a of the allergen sensor 500 acquires information about an amount of allergen, and transmits the information to the server apparatus 400a. In step S202, next, the second information acquisition unit 10b of the air cleaner 200a acquires operation data on the air cleaner 200a, and transmits the operation data to the server apparatus 400a. The information accumulation unit 20a of the server apparatus 400a accumulates the information about the amount of allergen in the space where the air cleaner 200a is installed, and the operation data on the air cleaner 200a.

In step S203, next, the operation-correlated information generation unit 40a of the server apparatus 400a generates operation-correlated information about a correlation between the operation data on the air cleaner 200a and a change in the amount of allergen.

In step S204, next, the useful information output unit 30a of the server apparatus 400a generates and outputs useful information based on the information accumulated in the information accumulation unit 20a. In step S205, next, the user terminal 300a acquires the useful information from the server apparatus 400a via a network 90.

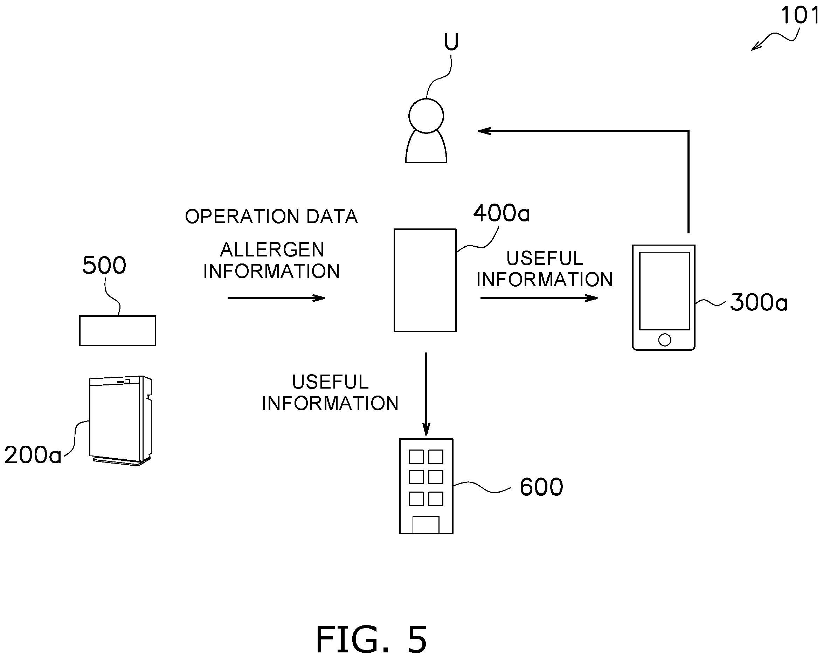

FIG. 5 illustrates an exemplary configuration of the useful information provision system 101.

First, the allergen sensor 500 transmits information about an amount of allergen to the server apparatus 400a. The air cleaner 200a transmits operation data to the server apparatus 400a.

The server apparatus 400a generates useful information based on the information about the amount of allergen being transmitted from the allergen sensor 500 and the operation data being transmitted from the air cleaner 200a. The server apparatus 400a then transmits the useful information to the user terminal 300a. The useful information transmitted from the server apparatus 400a to the user terminal 300a contains environment data. The environment data refers to data on an environment in which the air cleaner 200a is installed. The useful information transmitted from the server apparatus 400a to the user terminal 300a also contains air quality information, a result of analysis of a correlation between an environment and allergen, and a proposition of an option service. The proposition of an option service as used herein refers to a proposition for environmental improvement, and examples thereof may include, but not limited to, a proposition of a filter replacement service and a proposition of an air conditioner cleaning service.

A user U keeps the air cleaner 200a operating or stops the air cleaner 200a, based on the information received by the user terminal 300a.

The server apparatus 400a may transmit to an air cleaner manufacturer 600 the useful information generated based on the information about the amount of allergen being received from the allergen sensor 500 and the operation data received from the air cleaner 200a. The useful information transmitted from the server apparatus 400a to the air cleaner manufacturer 600 contains a result of analysis of the information about the amount of allergen and the operation data received from the air cleaner 200a.

FIG. 3 illustrates the server apparatus 400a including the useful information output unit 30a. Alternatively, the user terminal 300a may include a useful information output unit.

### (5-2) Modification 1B

In the foregoing description on the useful information provision system 100 according to this embodiment, the air cleaner 200 corresponds to an apparatus configured to reduce allergen. Alternatively, the apparatus configured to reduce allergen may be an air conditioner including a ventilator.

### (5-3) Modification 1C

In the foregoing description on the useful information provision system 100 according to this embodiment, the useful information contains the time-series data on the amount of allergen; however, the present disclosure is not limited thereto. The useful information may alternatively contain information about maintenance of an apparatus. The information about maintenance of an apparatus contains an apparatus filter replacement service or an apparatus filter cleaning service. For example, the useful information output unit 30 is capable of calculating, as the useful information, an appropriate timing of the apparatus filter cleaning service, from an amount of mold and an operating time of the air cleaner 200. In a case where a specific kind of allergen, such as pollen or pet dandruff, is detected in large amount, the useful information output unit 30 may propose, as the useful information, replacement of an original filter with a filter that is different in collecting ability from the original filter.

The useful information may alternatively contain a measure for each kind of allergen. Examples of the measure for each kind of allergen may include, but not limited to, a cleaning of a space, and a method of suppressing introduction of outside air into the space, such as closing a window.

### (5-4) Modification 1D

While various embodiments of the present disclosure have been described herein above, it is to be appreciated that various changes in form and detail may be made without departing from the spirit and scope of the present disclosure presently or hereafter claimed.

### REFERENCE SIGNS LIST

100, 101: useful information provision system
200, 200a: air cleaner
300, 300a: user terminal
400, 400a: server apparatus
500: allergen sensor
600: air cleaner manufacturer
10, 10a, 10b: information acquisition unit
20, 20a: information accumulation unit
30, 30a: useful information output unit
40, 40a: operation-correlated information generation unit
50: storage unit
90: network

### CITATION LIST

### PATENT LITERATURE

Patent Literature 1: JP 2018-146228 A

## Claims

1. A useful information provision system comprising:
an information acquisition unit (10) configured to acquire, for each kind of allergen, information about an amount of allergen in a space where an apparatus (200) configured to reduce allergen is installed;
an information accumulation unit (20) configured to accumulate the information acquired by the information acquisition unit; and
a useful information output unit (30) configured to generate and output useful information based on the information accumulated in the information accumulation unit.

2. The useful information provision system according to claim 1, wherein
the information acquisition unit further acquires operation data on the apparatus,
the useful information provision system further comprising
an operation-correlated information generation unit (40) configured to generate information about a correlation between an operation of the apparatus and a change in the amount of allergen.

3. The useful information provision system according to claim 1, wherein
the useful information output unit outputs, as the useful information, time-series data on the amount of allergen.

4. The useful information provision system according to claim 1, wherein
the useful information output unit outputs, as the useful information, information about maintenance of the apparatus.

5. The useful information provision system according to claim 4, wherein
the maintenance of the apparatus includes an apparatus filter replacement service or an apparatus filter cleaning service.

6. The useful information provision system according to claim 1, wherein
the useful information output unit outputs, as the useful information, a measure for each kind of allergen.

7. The useful information provision system according to claim 6, wherein
the measure for each kind of allergen includes a cleaning of the space or a method of suppressing introduction of outside air into the space.

8. The useful information provision system according to claim 1, wherein
the information acquisition unit chronologically acquires the information about the amount of allergen in the space where the apparatus is installed.
